# EUROPEAN PATENT APPLICATION

(11) **EP 1 574 830 A1**
(43) Date of publication of application: **14.09.2005**
(21) Application number: 04425154.4
(22) Date of filing: 08.03.2004
(51) Int. Cl.: G01H 1/00

(54) **Precision sensor assembly for rotating members in a machine tool**

(71) Applicant: BALANCE SYSTEMS S.p.A., 20145 Milano (IT)
(72) Inventor: Trionfetti, Gianni, 20041 Agrate Brianza (Milano) (IT); Guidotti, Andrea, 20061 Carugate (Milano) (IT)
(74) Representative: Lunati, Vittoriano

(57) **Abstract**

It is disclosed a precision sensor assembly for rotating members in a machine tool, comprising a rotor unit (16) rigidly fixed to a rotor portion (2a) of the machine tool and including means (5) for vibration perception provided with mechanical-amplification means (7, 8), a stator unit (17) which is separated from the rotor unit (16), is rigidly fixed to a stator portion (2b) of the machine tool and includes an electric amplifier (13), the rotor (16) and stator (17) units comprising transmitting (10) and receiving (11) elements respectively for transmission and reception of signals implemented by inductive systems.

## Description

This invention relates to a precision sensor assembly hereinafter referred to as sensor for the sake of brevity, for rotating members in a machine tool, of the type pointed out in the preamble of claim 1.

It is known that there are presently different types of sensors: they represent the primary element of regulation instruments, widely present in machines and tools. The fundamental task of said sensors is to detect a magnitude and convert it into a signal proportional thereto. The signal is processed and transmitted to an actuator that is the final element of the regulation instruments and carries out said regulation.

To detect vibrations caused by a specific cause such as a sound, noise, relative contact between two moving surfaces or others, sensors of the acoustic type are used that are called "Acoustic Emission" (AE) sensors.

In particular these sensors are utilised to detect vibrations and noise relating to rotating members.

A fundamental property partly determining the quality of these sensors of the acoustic type is the presence therein of the lowest possible level of spurious vibrations, to avoid said vibrations to be confused with the vibrations that must be perceived by the sensor.

In addition, these sensors are often impinged on by strong ground noise and strong electromagnetic ground fields present in the surrounding atmosphere and caused by electromagnetic units carrying out movement of the rotating members, for example.

These sensors therefore must have a sensitivity adapted to perceive the sought-for vibrations, while at the same time they must not be responsive to said ground noise and electromagnetic ground fields, in order not to be affected thereby.

Due to said possible presence of spurious vibrations or said requirement of not being responsive to ground noise, current sensors of the acoustic type for rotating members have, in many critical applications, response times of about one tenth of a second. In fact they detect said vibrations only after the same have overcome a predetermined, relatively high, threshold.

Practically, the sensors of the acoustic type presently in use are too slow to meet the requests of present precision mechanics, in particular for tooling.

Just by way of example, in grinding machines for finishing precision pieces such as gears, the sensors are placed onboard of the spindles and electric chucks and they have the task of ensuring the highest possible sensitivity in identifying the contact conditions between the rotating tool and workpiece.

For example, the abrasive grinding wheel must precisely reach the work position, placed in the centre of the groove or relief between two teeth of a circular gear and this position is reached gradually.

Each time the grinding wheel touches the gear teeth, it leaves small marks thereon. When a new piece is worked which has still coarse surfaces no problem exists because the stock to be removed allows a relatively high depth of the mark of first contact or touch. But when an already machined piece is to be taken up again for carrying out micrometric corrections, sensitivity in the touching step is indispensable for not leaving marks on the finished piece.

The workpieces in these machines are very expensive and the surface finishing quality is one of the fundamental requirements of the finished products. Practically, it was ascertained that for achieving an optimal finishing said grinding machines for gears need a response time of the sensors lower than one thousandth of a second.

Therefore, in the present state of the art the response time of the traditional sensors overcomes the optimal time by two orders of magnitude.

It is therefore apparent that present sensors cannot meet the working requirements called for in these fields.

An attempt could be made to reduce the problem by use of a sensor with a higher sensitivity, but this could give rise to wrong perceptions due to the vibrations caused by the mechanical members and the noise generated by the electromagnetic emissions for operation of the relatively-moving mechanical parts that, among other things, are also present in the sensor itself.

In addition, when a very high sensitivity is required, also placing an electric amplifier for the sensor signal in the vicinity of the sensor itself, where the signal is stronger, causes plenty of problems, due to the noise caused by the strong electromagnetic fields that are just present in this region, for the above mentioned reasons.

Therefore still unresolved is the technical problem of how to construct a sensor assembly for rotating members having response times adapted to the precision mechanics and the smallest possible number of mechanical vibrations due to the couplings present within the sensor itself.

Under this situation the technical task underlying the present invention is to devise a precision sensor assembly for rotating members in a machine tool, which is capable of substantially obviating the mentioned drawbacks.

Within the scope of this technical task it is an important aim of the invention to devise a sensor assembly capable of transmitting the signals concerning the sought-for vibrations in very reduced times, in the order of thousandths of a second.

It is a further aim of the invention to devise a sensor assembly capable of minimising the environmental noise due to friction between the mechanical couplings present in the sensor assembly itself, and capable of transmitting an electrically amplified signal, in spite of the presence of strong electromagnetic fields.

The technical task mentioned and the aims specified are achieved by a precision sensor assembly for rotating members in a machine tool, as claimed in the appended Claim 1.

Preferred embodiments are highlighted in the sub-claims.

Further features and advantages of the invention will be better clarified in the following by a detailed description of a preferred embodiment of the invention, with reference to the accompanying drawings, in which:
**Fig. 1** shows a precision sensor assembly for rotating members, mounted on a grinding wheel for grinding machines;
**Fig. 2** shows the grinding wheel referred to in the preceding figure when it is grinding a circular gear;

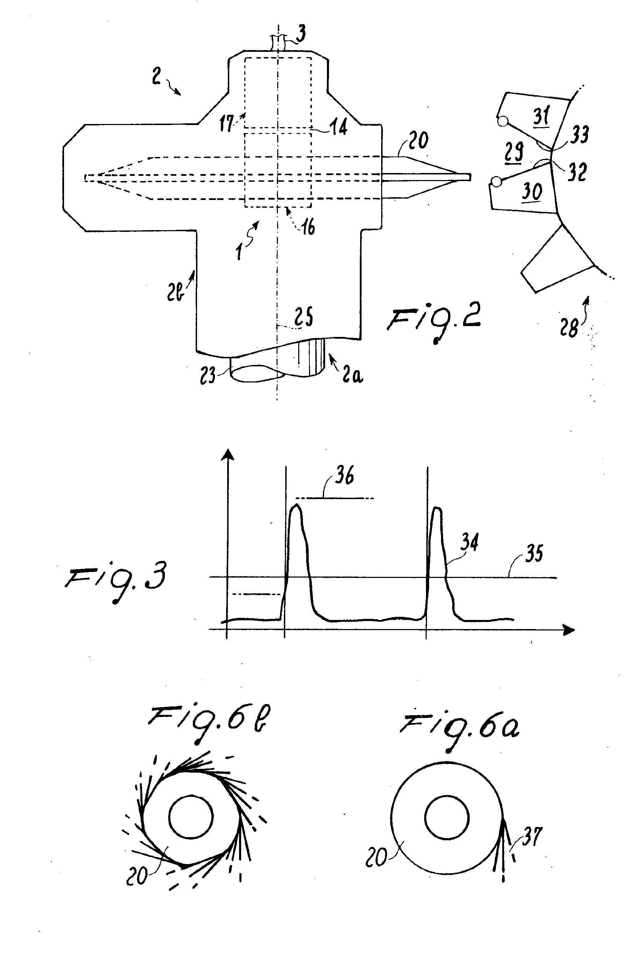

**Fig. 3** is a graph reproducing the time **t** in the x axis and the intensity **I** of a signal from a sensor assembly in accordance with the invention in the y axis;
**Fig. 4** is a graph having the time **t** in the x axis and different magnitudes in the y axis, said magnitudes indicating the behaviour of a measure-detecting apparatus preceding the sensor assembly being the object of the present invention,
**Fig. 5** is a graph similar to the one in Fig, 4, in which however the behaviour of a sensor assembly being the object of the present invention is shown;
**Figs. 6a** and **6b** diagrammatically show the flame created at the edges of a grinding wheel during the grinding operations.

With reference to the drawings, denoted at **1** is a sensor assembly or sensor in accordance with the invention which, as shown, is applied - by way of example - to a machining apparatus **2** including a grinding wheel **20** for grinding operations. The grinding wheel 20 extends in a plane **15** perpendicular to a rotation axis **25.** The sensor assembly or sensor 1 is connected to a regulator **4,** through a cable of the screened type **3.**

Regulator 4 is an electronic control and command box containing the control electronics embodied by members known by themselves that are adapted to filter, further amplify and normalise the signal received through cable 3. Also provided are members for converting the analog signal to a digital signal and a microprocessor for further processing operations. Included in the control electronics may also be an apparatus for graphic display of the process in progress and commands at the operators' disposal.

The machining apparatus 2 is a portion of a machine tool that in the case herein shown is a precision grinding machine and it appears to be mainly divided into a rotating rotor portion, generally identified by reference numeral 2a, and a stator portion that is restrained from rotation and is generally identified by reference numeral **2b.**

Sensor 1 is at the inside of the machining apparatus 2 and comprises, as the main part thereof, means for perceiving the vibrations of the rotor portion 2a embodied by an accelerometer **5** of the mechanically-amplified type.

The accelerometer 5 is practically formed of a sensitive element **6** preferably of the piezoelectric type and by means for mechanical amplification of the signals defined by a counter-mass **7** and an elastic element **8** substantially embodied by a spring.

In the instance shown the elastic element 8 is placed at an exactly central position with respect to grinding wheel 20 and is supported by the same at a position adapted to oscillate against the action of the sensitive element 6.

Said elements of the accelerometer 5 are also provided to be such calibrated and arranged as to detect signal variations or vibrations in a very high frequency range, included just as an indication between 100Hz and 1 MHz and beyond. Sensor 1 also comprises - among other things - means for transmitting the signals generated by the accelerometer 5. Said transmitting means comprises a transmitting element 10 to transmit the analog signal generated by the sensitive element 6.

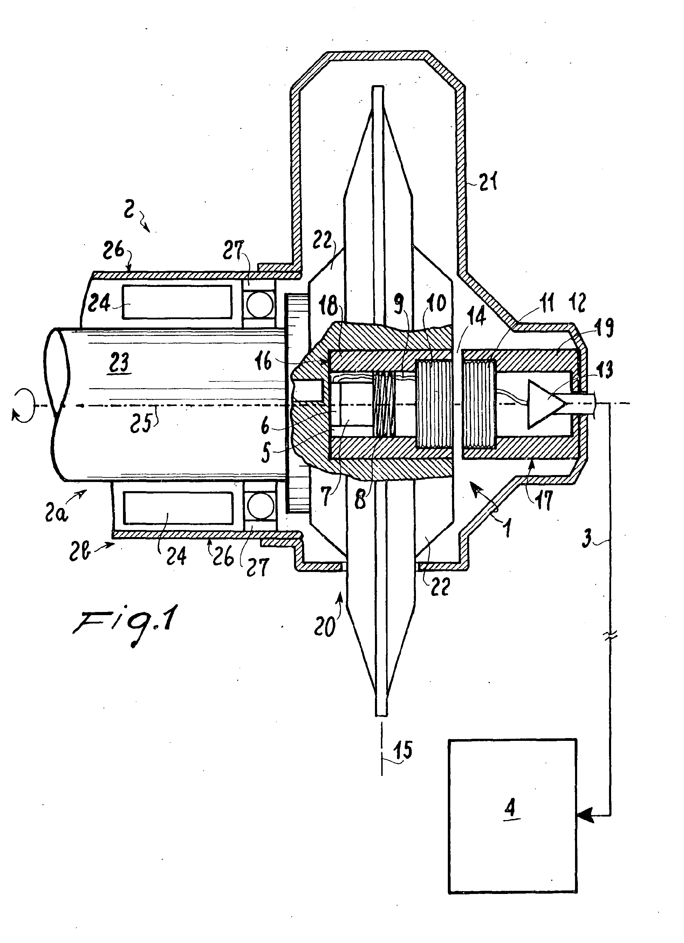

Fig. 1 highlights that a first electric connection **9** is provided to transmit the electric signal from the sensitive element 6 to the transmitting element 10.

This transmitting element 10 implements an inductive system and is formed of a cylinder made of ferrite on which a coil adapted to conduct the electric current is wound. Practically a transmitting antenna is obtained.

Also provided is a receiving element **11** to receive the signal transmitted by the transmitting element 10, also implementing an inductive system and consisting of a cylinder made of ferrite on which a coil adapted to conduct the electric current is wound.

A second electric connection **12** brings the outputted signal from the inductive receiving element 11 to an electric amplifier **13** with which the transmission cable 3 is connected.

Said transmitting 10 and receiving 11 elements are separated from each other by a gap **14** of about one millimetre. Gap 14 extends parallel to said extension plane 15 of the grinding wheel 20.

Sensor 1 is therefore formed of two parts separated from each other: a rotor unit **16** and a stator unit **17.**

The rotor unit 16 is rigidly fixed to the rotor portion 2a of the machining apparatus 2.

It is surrounded by a first protective shell **18** and internally holds the sensitive element 6, counter-mass 7, elastic element 8, first electric connection 9 and inductive transmitting element 10.

The stator unit 17 is linked to the stator portion 2b of the machining apparatus 2 and is connected to regulator 4 through cable 3.

It is surrounded by a second protective shell **19** and internally of the receiving element 11 itself it comprises the second electric connection 12 and electric amplifier 13.

With reference to the machining apparatus 2 implementing part of a machine tool, it is pointed out that in the rotor portion 2a the abrasive grinding wheel 20 is supported by packing flanges **22** and is connected to a spindle **23,** together with the rotor unit 16 of sensor 1. Spindle 23 extends in coaxial relationship with the grinding wheel 20 and sensor 1 along said axis 25, and the rotor unit 16 is placed at the end of spindle 23.

The rotational movement of the rotor portion 2a is caused by an electric power winding **24** for example, that is linked to the stator portion 2b of the machining apparatus 2.

The stator portion 2b is made up of: a body **26** external to spindle 23 and a protective casing **21** of the grinding wheel 20 supporting the stator unit 17 of sensor 1.

Contact between the stator portion 2b and rotor portion 2a takes place by means of bearings, in particular one bearing **27.**

In addition, shown in Fig. 2 is a gear **28** being the object of the machining operation carried out by the machining apparatus 2.

In gear 28 - shown in a diagrammatic and simplified manner - it is possible in particular to see a groove or relief **29** bounded by walls **32** and **33** belonging to teeth **30** and **31,** respectively.

In the different graphs it is then possible to distinguish an analog signal 34 from sensor 1 a contact threshold 35 fixing a reference value, on overcoming of which reference value the contact between spring 20 and gear 28, or any other workpiece, is considered as having taken place; and a digital output 36 of the processing electronics downstream of sensor 1, included in regulator 4.

For the sake of clarity, shown in the graphs are: along the line of the analog contact 34, points **34a** and **34b** indicating beginning of the contact and overcoming of the contact threshold 35, respectively. Also shown is the point of change of value **36a** of the digital output 36 of the electronics.

Diagrammatically shown in Fig. 6b is the flame amount due to contact between the grinding wheel 20 and gear 28, covering the whole circumference surrounding the grinding wheel 20, whereas in Fig. 6a a grinding wheel 20 is shown that is concerned with the presence of a single flare 37 of flame. Operation of sensor 1, positioned on the machining apparatus 2 and specifically referring to the application shown by way of example, is the following.

The grinding wheel 20, supported by the packing flanges 22, is fastened to spindle 23 and the rotor unit 16 of sensor 1 is placed internally of the system consisting of the grinding wheel 20 and the packing flanges 22, in the centre.

The rotor portion 2a of the machining apparatus 2 is set in motion by means of the power winding 24 and is supported, among other things, by bearing 27, fastened to the stator portion 2b.

The grinding wheel 20 and the circular gear 28 being the object of the machining operation, are disposed with the respective rotation axes perpendicular to each other. The circular gear 28 is positioned in such a manner that the area momentarily concerned with machining and consisting of teeth 30 and 31 and the relief 29 bounded by said teeth, is close to the grinding wheel 20.

In order to find the centre of the relief 29 included between the two teeth 30 and 31 in succession and to machine this region, the grinding wheel 20 and circular gear 28 carry out a translation relative to each other.

Identification of relief 29 is made possible through signalling of the occurred contact with walls 32 and 33 of teeth 30 and 31.

By detecting the location of walls 32 and 33, and therefore the distance between said walls, calculation of the relative position of relief 29 and grinding wheel 20 is simple, since a relative approaching between walls 32 and 33 is an indication of the closeness of the relief 29, as can be inferred if one looks at gear 28 in Fig. 2. The task of sensor 1 is to perceive the occurred contact and transmit the information to cable 3 connecting sensor 1 to regulator 4.

Practically sensor 1 is utilised as a touch probe.

To detect the occurred contact between spring 20 and gear 28, sensor 1 uses the accelerometer 5.

In fact, contact between spring 20 and walls 32 or 33 gives rise to vibrations and these vibrations, mechanically amplified by the elastic element 8, set the counter-mass 7 in motion, which mass is rigidly fixed to the piezoelectric sensitive element 6.

Said sensitive element converts the mechanical signals amplified by the elastic element 8, into analog signals 34.

It will be recognised that the accelerometer is not used for measuring an acceleration but it is used for detecting very quick signal variations, said accelerometer 5 being such structured and calibrated that it detects frequencies greatly higher than those of traditional accelerometers.

In fact it covers a frequency spectrum included between about 100 Hz and 1 MHz and beyond, instead of covering the classic frequency band from about 0.1 Hz to about 10kHz,

The analog signals 34 outputted from the piezoelectric sensitive element 6 are transmitted through the first electric connection 9 to the transmitting element 10. By virtue of the known electromagnetic phenomenon used by the inductors to transmit a signal, passage of the analog signal 34 from the rotor unit 16 of sensor 1 where signal 34 has been formed, to the stator unit 17 is possible, without the occurrence of any contact between them.

The rotor 16 and stator 17 units are in fact separated by a gap 14, practically defined by an air cushion and are not at all connected by cables, fibres or the like. Signal 34 therefore reaches the inductive receiving element 11 that in turn transmits it - through the second electric connection 12 - to the electric amplifier 13 that is positioned far away from the electromagnetic currents generated by the power winding 24.

Connected with the electric amplifier 13 is cable 3 that will transmit the analog signal 34 to the regulator 4.

During the search process to find the centre of relief 29, as above described, it is fundamental for the grinding wheel 20 not to penetrate or grind the teeth 30 and 31 of the circular gear 28 too much.

To judge whether the operation quality is good two factors correlated with each other are used: the depth of the mark left by the grinding wheel 20 on getting into contact with the side walls 32 and 33, and the amount of the flame generated during contact and propagating along the grinding wheel edges, as diagrammatically shown in Figs. 6a and 6b.

In finishing machining, such as grinding of an object, it is suitable that the depth of the mark should not overcome five microns or, by examining a factor that can be more easily seen by the operator, that propagation of the flame should take place for about one fourth of the circumference consisting of the grinding wheel edges, as diagrammatically shown in Fig. 6a.

Once the movement parameters of the machine have been allocated, if for the grinding wheel 20 a typical rotation speed in the order of nine hundred revolutions per minutes is indicated, the grinding wheel will cover one fourth of a circumference in about seventeen thousandths of a second. This is the maximum time gap for contact between the two parties, to leave marks of first contact that are less than five microns deep.

In about seventeen thousandths of a second, sensor 1 must perceive and transmit the signal of the occurred contact and regulator 4, if the contact threshold 35 has been overcome, must command stopping of the grinding wheel 20 through a digital electric signal 36.

The inner reaction time of the electronics in regulator 4 is of about one thousandth of a second, whereas the reaction time of the members stopping the displacements of the grinding wheel 20 to move it close to gear 28 is about sixteen thousandths of a second.

Sensor 1 must therefore react in less than one thousandth of a second and this immediate reaction really occurs because with the invention a flame amount equal to or lower than one fourth of a circumference of the grinding wheel 20 is noticed.

The invention achieves important advantages.

Sensor 1 appears to be much more responsive to vibrations than normal sensors AE. In fact the response time from a delay of 100 thousandths of a second goes to less than one thousandth of a second.

The achieved advantages, by virtue of this great reduction in the response time of sensor 1, are very important.

In the example of the machining apparatus 2 previously described by way of example, the movements of the abrasive grinding wheel 20 can be stopped in about 17 thousandths of a second instead of requiring about 117 thousandths of a second.

Therefore, as diagrammatically shown in Fig. 6b, the grinding wheel 20 can be stopped when the same has generated a flame amount surrounding only one fourth of the grinding wheel circumference at most.

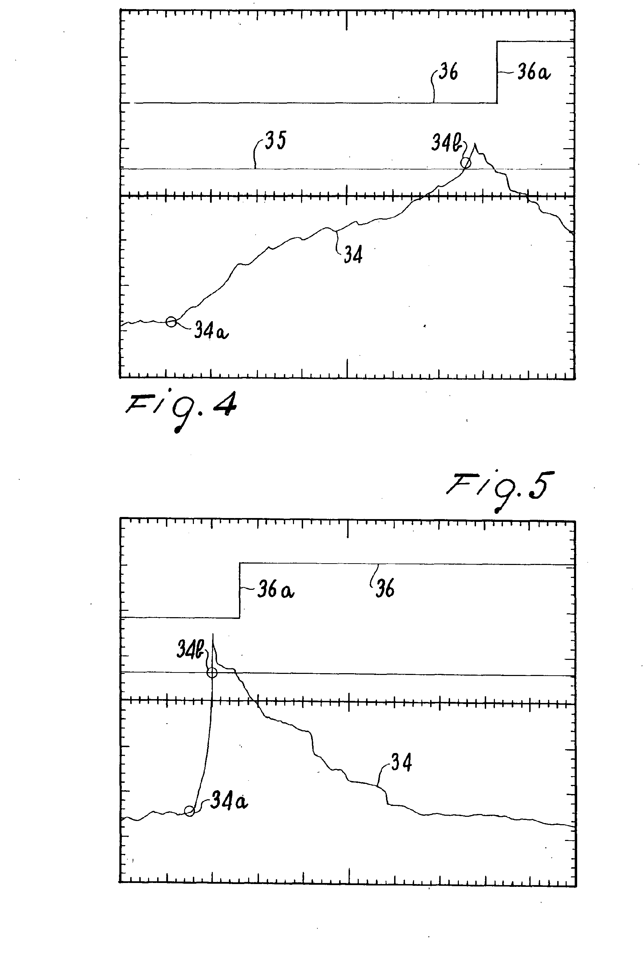

Graphs in Fig. 4 show the course of the previously described process upon introduction of the present innovation, still referring to apparatus 2.

It will be recognised that the stop command for the rotor portion 2a that can be noticed from the change of value at point 36a of the digital electronic response signal 36 outputted from regulator 4, takes place after the vibrations of the grinding wheel 20 indicated by the analog electric signal 34 have propagated for more than 100 thousandths of a second.

This is mainly due to the fact that between beginning of the vibrations due to contact, which beginning takes place at point 34a, and detection of the contact by sensor 1, taking place at point 34b, at least about 100 thousandths of a second elapse.

On the contrary, shown in Fig. 5 are the graphs obtained with use of the present sensor 1, still with reference to apparatus 2: regulator 4 emits the digital electronic signal 36 for stopping the grinding wheel 20 at point 36a, after the vibrations of said grinding wheel 20, indicated by the analog electric signal 34, have propagated for less than two thousandths of a second.

In particular it is possible to see that sensor 1 carries out detection of the contact, which contact detection takes place at point 34b in less than one thousandth of a second starting from the moment said contact has occurred, i.e. at point 34a.

A further advantage is given by the fact that sensor 1 is made up of two parts, a stator unit 17 and a rotor unit 16 that are not in contact with each other but are separated by an air cushion 14.

Consequently, there is no ground noise that could interfere with sensor 1, due to the relative movement of the mechanical parts.

This full separation between the stator unit 17 and rotor unit 16 in addition, eliminates the mechanical friction in this region and also energy dissipation, which would cause wear of the above units and, as a result, a periodic replacement of same.

Another important advantage resides in the amplification of the sensor 1 signal being initially mechanical.

In fact a clean transmission of the electric signal 34 from the piezoelectric sensitive element 6 to the electric amplifier 13, in the regions subjected to the influence of the electromagnetic currents generated by the electric power winding 24 is made possible by the mechanical amplification of the signal carried out by the accelerometer 5 that is not invalidated by said electromagnetic fields, which would occur to an electric amplifier located in this region.

Close to the end of the machining apparatus 2 including the stator unit 17 of sensor 1 and the receiving element 11, the electromagnetic fields caused by the electric power winding 24 are weaker, and the presence of the electric amplifier 13 is allowed, which amplifier is the last generation stage of the electric signal present in sensor 1 that is now ready for transmission to the regulator.

The invention is susceptible of changes falling within the scope of the inventive idea and it will be recognised that sensor 1 can be utilised for different applications contemplating use of a sensor in a member set in rotation.

In particular sensor 1 can be utilised in the sector of the machine tools, in different types of grinding machines, lathes, milling machines, machining centres. All of the details can be replaced by equivalent elements and the materials, shapes and sizes can be of any nature and magnitude.

## Claims

1. A precision sensor assembly for rotating members in a machine tool, said machine tool including at least one rotatable rotor portion (2a) and a stator portion (2b) restrained from rotating, and said sensor assembly comprising at least means for perceiving the vibrations of said rotor portion (2a) and adapted to emit signals correlated with said vibrations, and means for transmitting said signals,
- **characterised in that** it comprises at least one rotor unit (16) rigidly fixed to said rotor portion (2a) and including said perceiving means, and a stator unit (17) rigidly fixed to said stator portion (2b), and **in that** said rotor (16) and stator (17) units are arranged separated from each other and in the absence of mutual contact, said transmitting means including transmitting elements (10) and receiving elements (11) for transmission and reception of said signals, that are located in said rotor unit (16) and stator unit (17), respectively.

2. A sensor assembly as claimed in claim 1, wherein said member for perceiving said vibrations is an accelerometer (5).

3. A sensor assembly as claimed in claim 2, wherein said accelerometer comprises means for mechanical amplification of said vibrations.

4. A sensor assembly as claimed in claim 2, wherein said accelerometer (5) comprises a piezoelectric sensitive element (6) and means for mechanical amplification of said vibrations comprising an elastic element (8) and a counter-mass (7) interposed between said elastic element (8) and sensitive element (6).

5. A sensor assembly as claimed in claim 4, wherein said rotor portion (2a) of said machine tool comprises an abrasive grinding wheel (20) and wherein said accelerometer (5) has said elastic element (8) supported by said grinding wheel (20), at the centre thereof, and oscillating against the action of said sensitive element (6).

6. A sensor assembly as claimed in claim 2, wherein said accelerometer (5) is calibrated so as to detect vibrations with frequencies included between 100 Hz and 1 MHz.

7. A sensor assembly as claimed in claim 1, wherein said transmitting (10) and receiving (11) elements implement inductive systems and are substantially defined by a ferrite core covered with an electric winding.

8. A sensor assembly as claimed in claim 1, wherein said rotor unit (16) is coaxial with said rotor portion (2a) and comprises a mechanical amplifier for said vibrations, and wherein said stator unit (17) comprises an electric amplifier (13) to amplify the signal received from said rotor unit (16), said stator unit (17) and said electric amplifier being at a position far away from strong electromagnetic currents.

9. A sensor assembly as claimed in claim 1, wherein said machine tool is a grinding machine for gears and wherein said rotor unit (16) is integrated into the spindle (23) of said machine.

10. A sensor assembly as claimed in claim 1, wherein said sensor assembly is used as a "touch probe".

11. A machine tool **characterised in that** it comprises a precision sensor assembly as claimed in one or more of the preceding claims.
